# EUROPÄISCHE PATENTANMELDUNG

(11) **EP 0 951 929 A2**
(43) Veröffentlichungstag der Anmeldung: **27.10.1999**
(21) Anmeldenummer: 99810334.5
(22) Anmeldetag: 21.04.1999
(51) Int. Cl.: B01D 29/68

(54) **Rückspülbarer Filter**

(30) Priorität: 21.04.1998 CH 90898
(71) Anmelder: J.+ R. Gunzenhauser AG, CH-4450 Sissach (CH)
(72) Erfinder: Bürli, Kurt, 4463 Buus (CH)
(74) Vertreter: Ullrich, Gerhard, Dr.

(57) **Zusammenfassung**

Der rückspülbare Filter, insbesondere als Hauswasser-Feinfilter geeignet, besitzt einen Zufluss (**A**) für ungefiltertes Wasser, einen Austritt (**B**) für gefiltertes Wasser und einen Abfluss (**E**) für das im Rückspülmodus anfallende Schmutzwasser. Mehrere sich über die gesamte Länge des Filtereinsatzes (**1**) erstreckende Absauger (**2**) weisen auf die äussere Mantelfläche des Filtereinsatzes (**1**) gerichtete Saugspalte (**20**) auf. Im Rückspülmodus wird ein Turbinenrad (**7**) vom durchfliessenden Medienstrom angetrieben und dessen hochtourige Rotation in eine langsame, kraftvolle Rotation der Absauger (**2**) mittels eines Untersetzungsgetriebes (**4,7,8,9**) transformiert. Besondere Vorteile des Filters bestehen in der Nutzung des Turbinenantriebs, wobei die Saugspalte (**20**) durch eine reduzierte Geschwindigkeit der Absauger (**2**) eine genügend kleine Überstreichgeschwindigkeit auf der Manteloberfläche des Filtereinsatzes (**1**) haben und kraftvoll bewegt werden, so dass ein Blockieren weitgehend ausgeschlossen ist. Vorteilhaft ist der Filtereinsatz (**1**) aus scheibenförmigen Filterringen aufgebaut.

## Beschreibung

### Anwendungsgebiet der Erfindung

Vorliegende Erfindung betrifft einen rückspülbaren Filter für flüssige Filtermedien, insbesondere einen Hauswasser-Feinfilter. Solche Filter werden eingesetzt, um das das Wasserwerk in einwandfreier Qualität verlassende Trinkwasser, welches ein langes Leitungsnetz durchströmt und dabei Verunreinigungen aufnimmt, zu filtern, bevor es in das häusliche Verbrauchernetz eintritt. Derartige Verunreinigungen können z.B. Rostpartikel, Metallspäne, Sandkörnchen und Dichtungsteilchen sein. Diese Verunreinigungen beeinträchtigen die hygienische Wasserqualität und können zu Störungen an Armaturen führen. Folgenschwerer aber ist, dass sich die Verunreinigungen ablagern und eine vom Rohrinnern wirkende Korrosion verursachen, was letztlich zu Lochfrass und Rohrbrüchen führt. Die schädigenden Auswirkungen der betreffenden Verunreinigungen sind seit langem bekannt. Daher sind seit langem sogenannte Hauswasser-Feinfilter verschiedener Anbieter auf dem Markt, um die unerwünschten Partikel vor dem Eintritt in das häusliche Verbrauchernetz aus dem zufliessenden Trinkwasser herauszufiltern. Da sich der Filter alsbald zusetzt, was einen anwachsenden Strömungswiderstand bedeutet, und ein häufiger Filteraustausch zu aufwendig wäre, hat man rückspülbare Filter geschaffen, die von Zeit zu Zeit im Rückspülmodus gefahren werden, um die sich am Filter abgesetzte Verschmutzung wegzuspülen. Der freigespülte Schmutz wird in das Abwasser geleitet. Mit dem Freispülen des Filters wird fast wieder dessen volle Leistungsfähigkeit erreicht. Mit einem derartigen rückspülbaren Filter befasst sich die hiesige Erfindung.

### Stand der Technik

Aus dem DE-U-1 836 414 ist ein rückspülbarer Filter bekannt, wo an der Peripherie des zylindrischen Filtereinsatzes ein um den Mantel des Filtereinsatzes rotierbares Düsenrohr angeordnet ist. Das Düsenrohr besitzt an der äusseren Oberfläche des Filtereinsatzes zugeordnete Öffnungen und führt zur Abwasserleitung. Im Rückspülmodus wird mittels einer Handkurbel und einer Zahnradanordnung das vertikal sich entlang des Filtereinsatzes erstreckende Düsenrohr um den Filtereinsatz bewegt, um den rückgespülten Schmutz aufzunehmen. Anstelle der Handkurbel kann auch ein Elektromotor als Antrieb eingesetzt werden. Dieser Filter bedarf eines separaten, äusseren Antriebs, um das Düsenrohr in Drehung zu versetzen. Ein Filter, wo das Rückspülprinzip in kinematischer Umkehr realisiert ist, wird in der EP-A-0 577 941 offenbart. Hier stehen die Düsenrohre fest, während der Filtereinsatz drehbar gelagert ist.

In der DE-C-43 37 187 wird ein rückspülbarer Filter mit einem drehbar angeordneten Filtereinsatz und dazu peripher positionierten Rückspülrinnen beschrieben, wo im Filtergehäuse, nahe dem Schmutzwasserabfluss, ein Turbinenrad vorgesehen ist. Bei Freigabe des Schmutzwasser-Abflusses - dies geschieht durch Öffnen eines Ablassventils - werden das Turbinenrad und der mit diesem fest verbundene Filtereinsatz in Drehung versetzt. Hierdurch fährt die gesamte Mantelfläche des Filtereinsatzes an der Spülrinne vorbei und soll dabei den rückgespülten Schmutz aufnehmen. Die Umkehrung dieses Konstruktionsprinzips wird in der DE-C-44 24 232 dargelegt, wo der Filter mit dem Gehäuse feststehend ist und über die Turbine die damit verbundene, rotierbare Rückspülrinne in Drehung versetzt wird. Nachteilig bei diesen Konstruktionen ist, dass sich Filter bzw. Rückspülrinne im Rückspülmodus mit sehr hoher Geschwindigkeit drehen, was nur eine äusserst geringe Verweilzeit der Rückspülrinne über einem zu reinigenden Sektor des Mantels des Filtereinsatzes zulässt. Damit dürfte eine gründliche Reinigung des Filtereinsatzes kaum möglich sein. Überdies besteht bei den auftretenden Verschmutzungen auf der Zulaufseite des Filters, wo sich auch das Turbinenrad befindet, eine erhöhte Gefahr, dass das Turbinenrad bzw. die Rückspülrinne infolge der Verschmutzungen blockiert werden, also während des Betriebs stocken oder nicht anlaufen. Somit machen sich häufige Servicearbeiten erforderlich, was die Gebrauchswerteigenschaften des Filters erheblich reduziert.

Als Filtermaterial werden zumeist gewebeartige Geflechte, metallische Feinsiebe oder aneinander gereihte Filterscheiben verwendet. Die neuerdings verwendeten Filterscheiben (vgl. z.B. DE-A-39 09 810, US-A-4 752 394) folgen der Erkenntnis, dass für den Aufbau eines Spaltfilters ein sich nach aussen keilförmig erweiternder Querschnitt und Distanznocken von Vorteil sind. Derartige Spaltfilter besitzen auf der Eintrittsseite minimale Spalte, die sich nach innen erweitern. Somit werden alle grösseren anströmenden Schmutzpartikel aufgehalten und ein Verklemmen von kleineren, eingetretenen Partikeln in den Filterspalten ist weitgehend ausgeschlossen. Beim Rückspülmodus vom Filterinneren wirken die in Strömungsrichtung sich nun verengenden Spalte als Düsen, so dass das Freispülen begünstigt wird.

### Aufgabe der Erfindung

Angesichts der bestehenden, konstruktiven Unvollkommenheiten der existenten rückspülbaren Filter liegt der Erfindung das Problem zugrunde, einen verbesserten Filter der gattungsmässigen Art mit einem Turbinenrad zu schaffen, wo die Reinigung im Rückspülmodus gründlicher erfolgt und ein Blockieren des Rückspülantriebs durch angelagerte Schmutzpartikel weitgehend ausgeschlossen ist. Eine weitere Aufgabe der Erfindung besteht darin, insbesondere für rückspülbare Filter der hiesigen Gattung, eine wirksamere Konfiguration von Filterscheiben vorzuschlagen, die auch optimale Fertigungsbedingungen ermöglicht.

### Übersicht über die Erfindung

Die prinzipiellen Merkmale des erfindungsgemässen rückspülbaren Filters bestehen darin, dass zwischen das im Rückspülmodus durch den Medienstrom in Drehung versetzte Turbinenrad und dem von diesem angetriebenen Filterbauteil - dem Filtereinsatz oder dem Absauger - ein Untersetzungsgetriebe angeordnet ist. Vorzugsweise ist als Untersetzungsgetriebe ein exzentrisches Planetengetriebe vorgesehen, das einen oder mehrere Absauger um den Aussenmantel des Filtereinsatzes führt. Als besonders vorteilhaft hat sich herausgestellt, als Absauger mehrere zum Filtereinsatz achsparallele Rohre anzuordnen, die einen auf die äussere Oberfläche des Filtereinsatzes gerichteten, axial verlaufenden Saugspalt besitzen. Eine bevorzugte Untersetzung zwischen Drehzahl des Turbinenrades und Drehzahl der Absauger liegt in der Grössenordnung von ca. 300:1.

Die Spezifika der erfindungsgemässen Filterringe liegen darin, dass die scheibenförmigen Filterringe auf der Austrittsseite einen verjüngten Querschnitt aufweisen und auf der dem benachbarten Filterring zugewandten Ringfläche Abstandsnocken besitzen, welche die Spaltbreite und damit die Filterfeinheit bestimmen. Ausserdem besitzt jeder Filterring einen nach innen weisenden Positionierungsnocken für die Ausrichtung der zahlreichen Filterringe beim Zusammenbau des Filtereinsatzes.

Mit der Erfindung steht nun ein rückspülbarer Filter zur Verfügung, der als Antrieb für den Rückspülmodus ein intern angeordnetes Turbinenrad verwendet, dessen hochtourige Drehzahl untersetzt wird, so dass für den Absaugvorgang genügend Zeit verbleibt und ein so grosses Drehmoment zur Verfügung steht, dass gelegentlich am Antrieb angelagerte Schmutzpartikel nicht vorzeitig ein Blockieren des Antriebs bewirken können.

### Kurzbeschreibung der beigefügten Zeichnungen

Es zeigen:

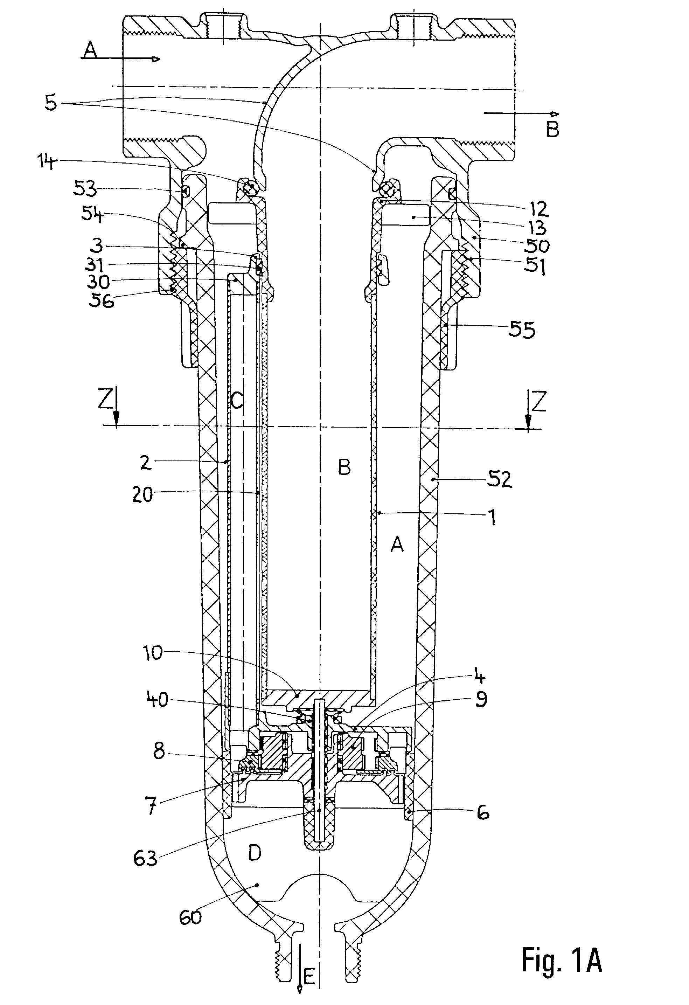

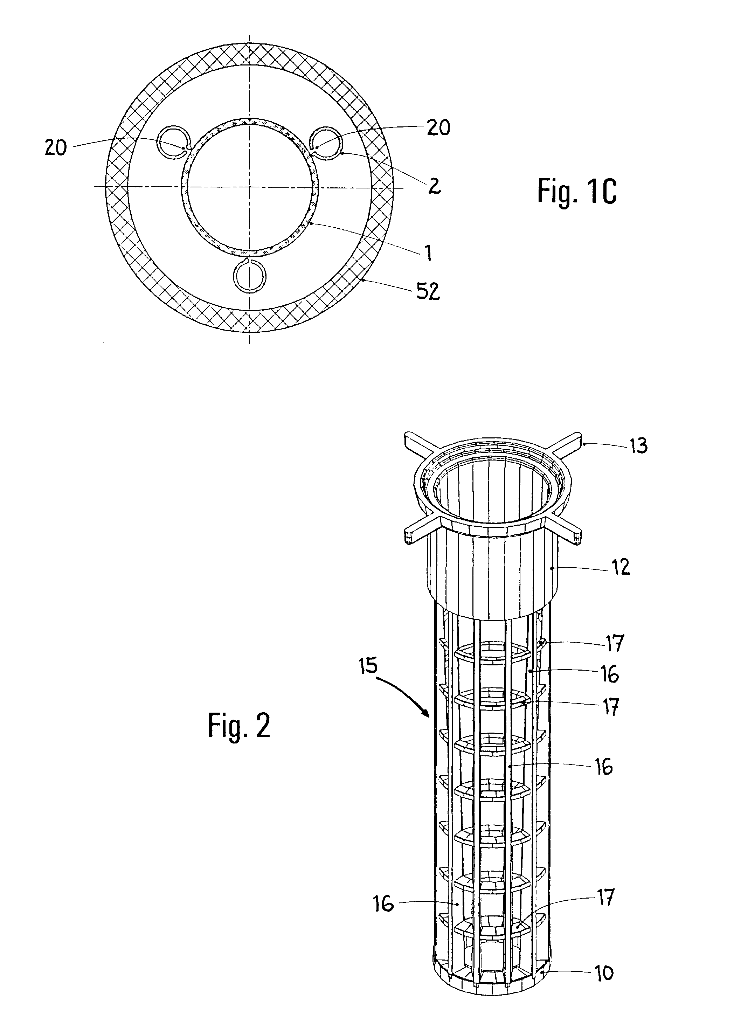

- Figur 1A:: einen Vertikalschnitt durch den gesamten Rückspülfilter;

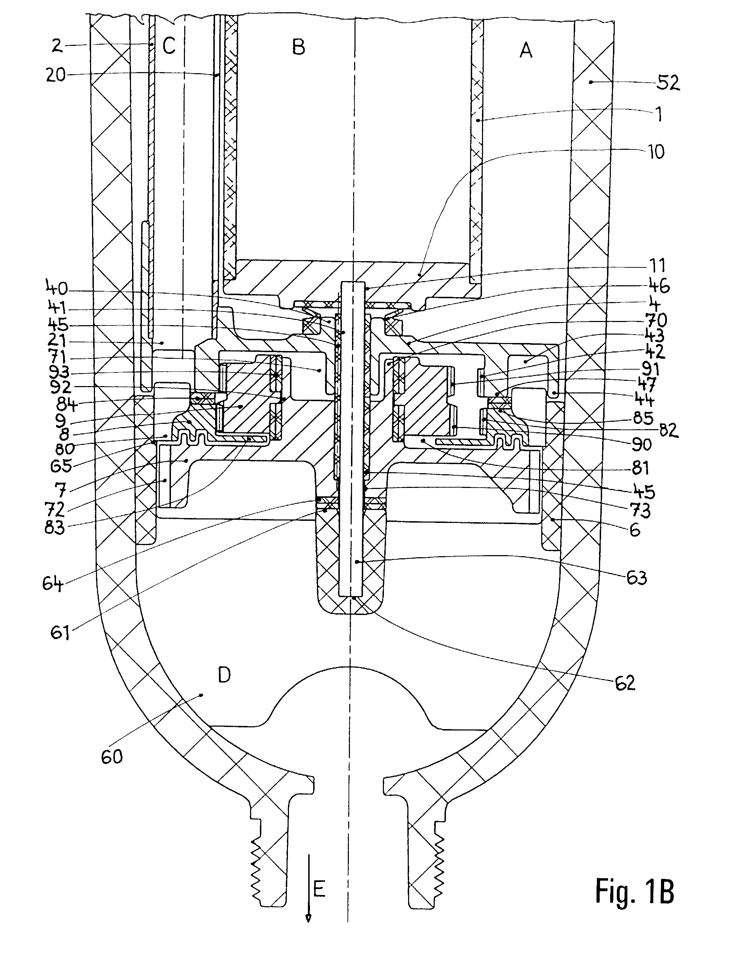

- Figur 1B:: den unteren Teil des Rückspülfilters mit dem Untersetzungsgetriebe gemäss Figur 1A in vergrösserter Darstellung;
- Figur 1C:: einen Horizontalschnitt durch den Rückspülfilter gemäss Figur 1A auf der Linie Z-Z;
- Figur 2:: das Stützrohr des Filtereinsatzes;

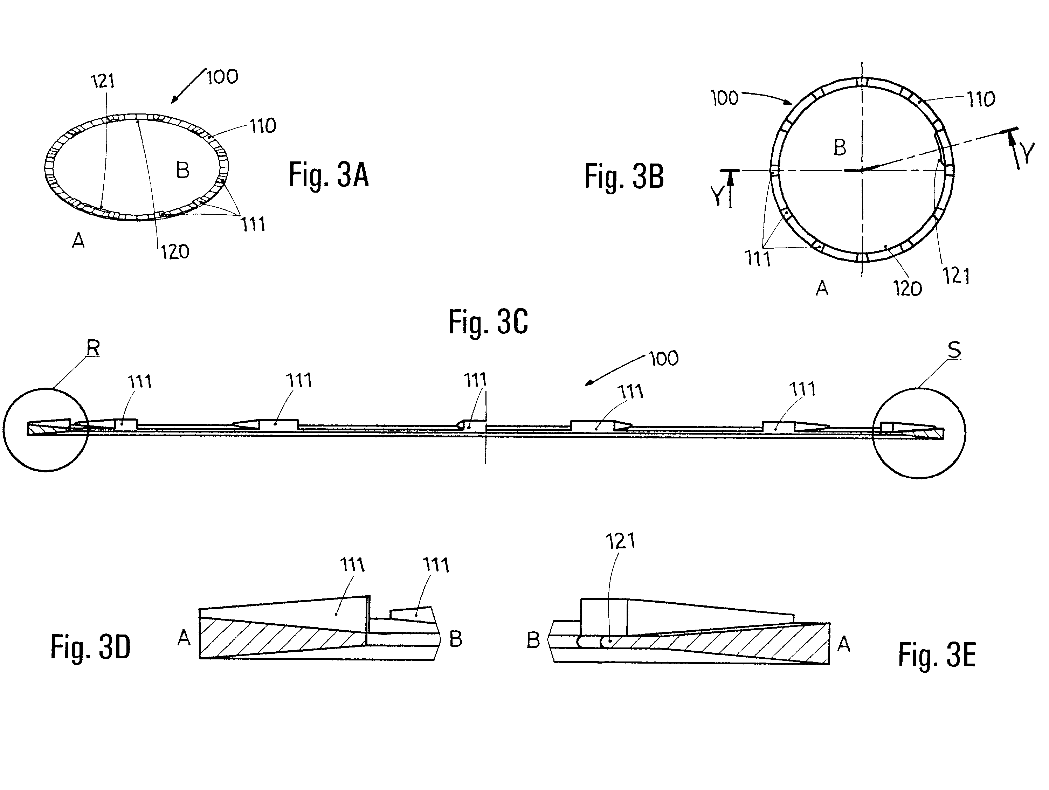

- Figur 3A:: einen Filterring in der Perspektivansicht von oben;
- Figur 3B:: den Filterring in der Draufsicht;
- Figur 3C:: den Filterring im Vertikalschnitt auf der Linie Y-Y;
- Figur 3D:: den Filterring im Detail R aus Figur 3C; und
- Figur 3E:: den Filterring im Detail S aus Figur 3C.

### Ausführungsbeispiel

Mit Bezug auf die beiliegenden Zeichnungen erfolgt nachstehend die detaillierte Beschreibung eines bevorzugten Ausführungsbeispiels des erfindungsgemässen rückspülbaren Filters. Abschliessend werden mögliche Modifikationen erwähnt.

### Figuren 1A bis 1C

In herkömmlicher Weise besitzt der Filter in der Kopfpartie einen Zufluss **A**, wo das ungefilterte Wasser über eine Zuleitung vom Versorgungsnetz einströmt, einen Austritt **B**, wo gefiltertes Wasser in das Hausverteilungsnetz ausströmt, sowie am Boden einen Abfluss **E** für die Ableitung von im Rückspülmodus angefallenem Schmutzwasser.

Ferner weist der Filter intern den patronenförmigen, axial angeordneten Filtereinsatz **1** sowie achsparallel dazu zumindest einen Absauger **2** auf. Vorteilhaft wird man drei um je 120° versetzt, peripher aussen am Filtereinsatz **1** angeordnete Absauger **2** vorsehen. Nächstgelegen zum Filtereinsatz **1** besitzen die Absauger **2** einen Saugspalt **20**, welcher sich über die gesamte axiale Länge des Filtereinsatzes **1** erstreckt. Die Absauger **2** haben die Form von Rohren, welche oben von einem Kragenring **3** mit Zungen **30** verschlossen und in Position gehalten werden. Die unteren, offenen Enden **21** der Absauger **2** münden in eine Mitnehmerplatte **4**, welche zentrisch einen Führungszapfen **40** mit einer Bohrung **41**, dazu konzentrisch einen Innenzahnkranz **42**, dazu konzentrisch eine Ringnut **43** und äusserlich eine nach unten gerichtete Ringschulter **44** aufweist. In der Bohrung **41** sitzt ein Lagerelement **45** und zentrisch auf der Mitnehmerplatte **4** sitzt zur Abdichtung ein elastischer V-Ring **46**, der sich an der Unterseite des Abschlussdeckels **10** abstützt. Das einstückige oder mehrteilige Lagerelement **45** erstreckt sich in die axiale Durchgangsbohrung **73** im Turbinenrad **7** hinein, um auch dort den Führungsstift **63** aufzunehmen. Die Mitnehmerplatte **4** und der Kragenring **3** werden von den Absaugern **2** beabstandet gehalten und bilden zusammen eine Einheit. Nahe dem oberen Ende sitzt im Kragenring **3** ein Lagerring **31**.

Der Filtereinsatz **1** besitzt zuunterst einen Abschlussdeckel **10** mit der unteren zentrischen Sacklochbohrung **11** und oben die Filterhülse **12** mit sternförmig nach aussen ragenden Stützflügeln **13.** Oberhalb der Stützflügel **13** ist in der Filterhülse **12** ein nach innen gewandter Dichtring **14** vorgesehen.

Zufluss **A** und Austritt **B** liegen vorteilhaft axial zueinander, wobei vom Austritt **B** ein Leitungsbogen **5** sich abwärts in axiale Richtung erstreckt und so den direkten Strömungsweg vom Zufluss **A** zum Austritt **B** versperrt. Die Filterhülse **12** ist mit dem Dichtring **14** auf den Leitungsbogen **5** dichtend aufgesteckt. Von Zufluss **A** und Austritt **B** erstreckt sich abwärts ein Schraubansatz **50** mit dem Innengewinde **51**, so dass der Leitungsbogen **5** vom Schraubansatz **50** überragt und konzentrisch umgeben wird. In den Schraubansatz **50** ist die haubenförmige Tasse **52** mit dem oben und nach aussen weisenden Dichtring **53** einsetzbar. Zum Verschrauben der Tasse **52** mit dem Schraubansatz **50** dient der Gewindering **55**, welcher mit ihrem Aussengewinde **56** in das Innengewinde **51** eingreift und sich gegen die Ringschulter **54** an der Tasse **52** presst. Der Dichtring **53** kommt im Innern des Schraubansatzes **50** zu liegen. Die Filterhülse **12** ist durch den Kragenring **3** und den Lagerring **31** geführt, während sich die Aussenkanten der Stützflügel **13** an der Innenwandung der Tasse **52** abstützen und eine Zentrierung der inneren Bauteile bewirken.

Im unteren Bereich der Tasse **52** sitzt das hülsenförmige Turbinengehäuse **6** mit den nach unten ragenden Rippen **60**, welche auf dem schalenartig konturierten Boden der Tasse **52** aufsetzen. Im Boden **61** des Turbinengehäuses **6**, der durch die sich kreuzenden Rippen **60** gebildet wird, gibt es eine zentrisch, vertikale Sacklochbohrung **62** zur Aufnahme eines empor ragenden Führungsstiftes **63.** Auf den Führungsstift **63** aufgesteckt ist das drehbare Turbinenrad **7** mit dem oberen, exzentrischen Zapfen **70,** aus welchem der Führungsstift **63** herausragt, wobei zwischen Boden **61** und Turbinenrad **7** eine Gleitscheibe **64** eingefügt ist. Von oben hat der Zapfen **70** eine Vertiefung **71**. Das Turbinenrad **7** weist radial, peripher angeordnete und schräg abwärts stehende Turbinenschaufeln **72** auf. In das Turbinengehäuse **6** ist das Leitrad **8** eingesetzt, welches ebenfalls radial, peripher angeordnete und schräg abwärts stehende Leitschaufeln **80** besitzt, wobei die Leitschaufeln **80** die zu den Turbinenschaufeln **72** entgegengesetzte Schrägstellung haben. Das feststehende Leitrad **8** stützt sich auf einer Ringschulter **65** im Turbinengehäuse **6** ab und kommt daher nicht mit dem darunter liegenden Turbinenrad **7** in Kontakt. An der Oberseite besitzt das Leitrad **8** eine Mittelbohrung **81** und einen im Durchmesser erweiterten Innenzahnkranz **82,** wodurch bodenseitig des Leitrades **8** eine Ringschulter **83** entsteht. Der Innenzahnkranz **82** stellt das Hohlrad des sich ergebenden Untersetzungsgetriebes dar. Die Mittelbohrung **81** erlaubt die freie Rotation des hindurchragenden exzentrischen Zapfens **70**. Auf den Zapfen **70** ist das Sonnenrad **9** aufgesetzt, welches mit seiner unteren ersten Zahnung **90** mit dem Innenzahnkranz **82** in Eingriff steht und durch die Exzentrizität am Innenzahnkranz **82** abrollt. Das Sonnenrad **9** besitzt über der ersten Zahnung **90** eine zweite Zahnung **91,** wobei der Führungsstift **63** auch das Sonnenrad **9** überragt.

Als axiale Lagerung und zum Zurückhalten von Schmutzpartikeln, die nicht in das Innere der Getriebeanordnung gelangen dürfen, ist ein weiteres Dichtungselement **84** vorgesehen. Dieses Dichtungselement **84**, eine Ringscheibe, ist auf die obere Ringschulter **85**, welche sich horizontal zwischen den Leitschaufeln **80** und dem Innenzahnkranz **82** des Leitrades **8** erstreckt, aufgelegt. Von oben sitzt auf dem Dichtungselement **84** die horizontale Ringschulter **47** der Mitnehmerplatte **4** auf, wobei sich die Ringschulter **47** zwischen dem Innenzahnkranz **42** und der Ringnut **43** ergibt. Bei Verwendung von Metall ist es angebracht, zur besseren Lagerung des Sonnenrades **9** auf dem Zapfen **70** des Turbinenrades **7**, in die axiale Durchgangbohrung **92** am Sonnenrad **9** Lagerelemente **93** einzusetzen.

Im vollständig zusammengesetzten Zustand stösst der Führungsstift **63** in die Sacklochbohrung **11** des Abschlussdeckels **10** hinein und hebt somit den Filtereinsatz **1** leicht an. Zugleich kommen der Innenzahnkranz **42** der Mitnehmerplatte 4 mit der zweiten Zahnung **91** in Eingriff. Die hochtourige Rotationsbewegung des Turbinenrades **7** wird damit auf eine niedrigtourige Rotation der Absauger **2** untersetzt.

### Figur 2

Hier wird eine Ausführung eines Stützrohrs **15** für den Filtereinsatz **1** gezeigt. An die obere Filterhülse **12** mit den Stützflügeln **13** schliessen sich abwärts axial erstreckende und radial systematisch über den Umfang des Filtereinsatzes **1** verteilte Längsstreben **16** an, in die zur Versteifung zueinander parallel beabstandete Quersegmente **17** eingefügt sind. Die Längsstreben **16** münden im Abschlussdeckel **10**.

### Funktion des Filters - Filtermodus

Im Normalbetrieb durchströmt das am Zufluss **A** einströmende Wasser den Filter um es gereinigt am Austritt **B** wieder zu verlassen. Der Abfluss **E** ist gesperrt. Beim Einströmen in den Filter wird das Wasser durch den absperrenden Leitungsbogen **5** in die Tasse **52** gezwungen, gelangt von hier, d.h. von aussen durch den Filtereinsatz **1** in dessen Innenraum, der eine Fortsetzung des Austritts **B** darstellt. Vom Filtereinsatz **1** zurückbehaltene Schmutzpartikel lagern sich an der äusseren Mantelfläche des Filtereinsatzes **1** ab. Das gereinigte Wasser verlässt den Filter über Austritt **B** und strömt in das häusliche Abnehmernetz.

### Funktion des Filters - Rückspülmodus

Durch Sichtkontrolle, periodisch routinemässig oder durch eine Differenzdruckanzeige, welche den wachsenden Strömungswiderstand des Filters infolge von ansteigender Verschmutzung wiedergibt, wird der Rückspülmodus eingeleitet. Hierzu wird der Abfluss **E** geöffnet, z.B. öffnet man einen in dem Abfluss nachgeschalteten Kugelhahn. Damit fällt der Druck im Abfluss **E** zusammen und das über den Zufluss **A** einströmende Wasser fliesst letztlich dem Abfluss **E** zu. Zunächst wird das Wasser aber ebenfalls von aussen durch den Filtereinsatz **1** und weiter durch die Saugspalte **20** in die Absauger **2** mit dem Innenraum **C** gezwungen. Infolge des Druckgefälles zum Abfluss **E** und dem davor liegenden Raum **D** im Bodenbereich der Tasse **52** strömt das Wasser auf die Leitschaufeln **80** des Leitrades 8 und wird damit auf die Turbinenschaufeln **72** des Turbinenrades **7** gelenkt. Die Strömungsenergie bringt das Turbinenrad **7** in Rotation, dessen Bewegung über das Sonnenrad **9** auf die Mitnehmerplatte **4** untersetzt wird. Damit werden die Absauger **2** mit ihren Saugspalten **20** um den äusseren Mantel des Filtereinsatzes **1** bewegt. Mit der Strömung wird der Mantel freigespült und die von der Filteroberfläche gelösten Schmutzpartikel gelangen in den Abfluss **E**. Als Starthilfe zur Überwindung eventueller Anlaufschwierigkeiten kann man zwischen der Mitnehmerplatte **4** und der Innenwandung der Tasse **52** einen Spalt vorsehen, so dass das Turbinenrad **7** einen Anschub erfährt.

### Figuren 3A bis 3E

Mit besonderem Vorteil ist der Filtereinsatz **1** aus einer Vielzahl von scheibenförmigen Filterringen **100** aufgebaut, welche auf das Stützrohr **15** aufgeschoben sind und zusammengehalten werden. Auf der Anströmseite **A** - die Seitenbezeichnung bezieht sich auf den Filtermodus - besitzt der einzelne Filterring **100** einen erweiterten Querschnitt, der sich zur Abströmseite **B** hin verjüngt. Typischerweise hat der Querschnitt also Keilform.

Auf einer Ringfläche **110** sind systematisch über den Umfang verteilte Abstandsnocken **111** angeordnet. Im mit weiteren Filterringen **100** zusammengefügten Zustand, bestimmt die Höhe der Abstandsnocken **111** die Spaltbreite und damit die Filterfeinheit. Am Filterring **100** ist ferner auf der Innenseite **120** ein nach innen gewandter Positionierungsnocken **121** vorhanden. Diese Positionierungsnocken **121** kommen beim Aufschieben auf das Stützrohr **15** zwischen zwei Längsstreben **16** zu liegen, so dass alle Abstandsnocken **111** aller aneinander gefügten Filterringe **100** zueinander ausgerichtet sind, d.h. zueinander fluchten. Die Ausrichtung vermeidet unregelmässige Strukturen und Verwerfungen im Filtereinsatz **1**.

Als mögliche konstruktive Modifikationen seien noch ausdrücklich erwähnt:
- Es ist denkbar, wenn man nur einen Absauger **2** vorsieht, den Saugspalt **20** nicht durchgängig und allenfalls nicht über die ganze Länge des Filtereinsatzes **1** auszubilden. Jedoch kann hierdurch im Rückspülmodus ein verringertes Freispülen der Manteloberfläche entstehen.
- Realiserbar ist auch, anstelle des Sauspaltes **20** andere Öffnungsgeometrien, wie Langlöcher oder Perforationen, vorzusehen.
- Schliesslich kann man als Alternative bei Verwendung mehrerer Absauger **2** die Saugspalte **20** bei jedem Absauger **2** abschnittsweise in unterschiedlicher Höhe ausbilden, so dass sich insgesamt ein Saugspalt ergibt, der zumindest nahezu der Länge des Filtereinsatzes **1** entspricht.
- Man könnte auch vorsehen, dass im Rückspülmodus vom Turbinenrad **7** sowohl die Absauger **2** als auch der Filtereinsatz **1** in Rotation versetzt werden. Eine solche beidseitige Rotation könnte das Abschleudern von Schmutzpartikeln und den reinigenden Durchsatz des Spülwassers begünstigen. Von Vorteil wäre eventuell eine gegenläufige Rotation zwischen der Baueinheit mit den Absaugern **2** und dem Filtereinsatz **1**, welche der Fachmann getriebetechnisch auf bekannte Art herbeiführt. Zu bedenken ist allerdings, dass sich der Filter dann verkompliziert, verteuert und störanfälliger wird. Eine Entscheidung hierüber hängt demnach vom Bedürfnis bei den konkreten Verwendungsbedingungen sowie vom Verhältnis zwischen Aufwand und Nutzen ab.
- Das Dichtungselement **84** zwischen der Ringschulter **85** und der Ringschulter **47** könnte ersetzt werden, indem beide Flächen **85,47** als Planschliffe ausgeführt sind und auf diese Weise selbst dichten.

## Patentansprüche

1. Rückspülbarer Filter für flüssige Filtermedien, insbesondere als Hauswasser-Feinfilter dem häuslichen Verbrauchernetz vorgeschaltet, mit:
a) einem Zufluss (**A**) für das ungefilterte Wasser, einem Austritt (**B**) für das gefilterte Wasser und einem Abfluss (**E**) für das im Rückspülmodus anfallende Schmutzwasser;
b) einem innerhalb einer als Gehäuse ausgebildeten Filtertasse (**52**) angeordneten Filtereinsatz (**1**);
c) zumindest einem sich längs des Filtereinsatzes (**1**) erstreckenden Absauger (**2**), der eine auf die äussere Mantelfläche des Filtereinsatzes (**1**) gerichtete Öffnung (**20**) aufweist; wobei
d) der Filtereinsatz (**1**) feststehend ist, während der Absauger (**2**) in Rotation um den Filtereinsatz (**1**) versetzt werden kann oder der Absauger (**2**) feststehend ist, während der Filtereinsatz (**1**) in Rotation versetzt werden kann; oder Filtereinsatz (**1**) und Absauger (**2**) mit verschiedener Drehzahl oder in entgegengesetzter Richtung rotieren; und
e) einem vom Filtermedium angetriebenem Turbinenrad (**7**), welches im Rückspülmodus durch Antrieb des Absaugers (**2**) oder des Filtereinsatzes (**1**) eine Relativbewegung zwischen der äusseren Mantelfläche des Filtereinsatzes (**1**) und dem Absauger (**2**) bewirkt, dadurch gekennzeichnet, dass
f) zwischen das Turbinenrad (**7**) und den drehbaren Filtereinsatz (**1**) oder zwischen das Turbinenrad (**7**) und den drehbaren Absauger (**2**) ein Untersetzungsgetriebe (**4,7,8,9**) angeordnet ist.

2. Rückspülbarer Filter nach Anspruch 1, dadurch gekennzeichnet, dass das Untersetzungsgetriebe (**4,7,8,9**) ein im Boden der Filtertasse (**52**) angeordnetes Planetengetriebe ist, welches zusammen mit dem Turbinenrad (**7**) unterhalb des Filtereinsatzes (**1**) und dem Abfluss (**E**) zugewandt positioniert ist.

3. Rückspülbarer Filter nach Anspruch 1 oder 2, dadurch gekennzeichnet, dass
a) sich eine drehbare Einheit, die axial in sich den zylindrischen Filtereinsatz (**1**) aufnimmt, aus einem oberen Kragenring (**3**) und einem unteren Abschlussdeckel (**10**) zusammensetzt, zwischen denen sich vorzugsweise mehrere Absauger (**2**) erstrecken;
b) an der Unterseite der Mitnehmerplatte (**4**) sich ein Innenzahnkranz (**42**) befindet, der zum Eingriff mit der oberen Aussenverzahnung (**91**) des Sonnenrads (**9**) des Planetengetriebes bestimmt ist;
c) die übrige untere Aussenverzahnung (**90**) des Sonnenrads (**9**) mit dem Innenzahnkranz (**82**) eines über dem Turbinenrad (**7**) angeordneten Leitrad (**8**) in Eingriff steht; und
d) das Sonnenrad (**9**) auf einem exzentrisch angeordneten Zapfen (**70**) sitzt, der sich vom horizontalen, scheibenförmigen Turbinenrad (**7**) erhebt und durch eine Mittelbohrung (**81**) im scheibenförmigen Leitrad (**8**) ragt.

4. Rückspülbarer Filter nach Anspruch 3, dadurch gekennzeichnet, dass
a) das drehbare Turbinenrad (**7**) und das feststehende Leitrad (**8**) in einem Turbinengehäuse (**6**) untergebracht sind, welches in den Bodenbereich der Tasse (**52**) einsetzbar ist;
b) unten am Turbinengehäuse (**6**) Rippen (**60**) vorhanden sind, die an der Innenwandung der Tasse (**52**) aufsetzen;
c) im Boden (**61**) des Turbinengehäuses (**6**) ein Führungsstift (**63**) steckt, um den der exzentrische Zapfen (**70**) rotiert; und
d) das Turbinenrad (**7**) peripher angeordnete, radial am Aussenumfang systematisch verteilte Turbinenschaufeln (**72**) aufweist, welche eine entgegengesetzte Neigung zu den am Leitrad (**8**) peripher angeordneten, radial am Aussenumfang systematisch verteilten Leitschaufeln (**80**) besitzen.

5. Rückspülbarer Filter nach Anspruch 3, dadurch gekennzeichnet, dass
a) in Verlängerung des Filtereinsatzes (**1**) eine Filterhülse (**12**) vorgesehen ist, die sich durch den Kragenring (**3**) erstreckt und dazu bestimmt ist, auf einen vom Austritt (**B**) axial in die Tasse (**52**) einmündenden Leitungsbogen (**5**) dichtend aufgesteckt zu werden; und
b) die dem Aussenmantel des Filtereinsatzes (**1**) zugewandte Öffnung im Absauger (**2**) ein axialer Saugspalt (**20**) ist.

6. Rückspülbarer Filter nach Anspruch 3, dadurch gekennzeichnet, dass
a) als axiale Lagerung und gleichzeitige Abdichtung zum Zurückhalten von Schmutzpartikeln ein Dichtungselement (**84**) vorgesehen ist;
b) das Dichtungselement (**84**) ist auf die obere Ringschulter (**85**) aufgelegt, welche sich horizontal zwischen den Leitschaufeln (**80**) und dem Innenzahnkranz (**82**) des Leitrades (**8**) erstreckt; und
c) von oben auf dem Dichtungselement (**84**) die horizontale Ringschulter (**47**) der Mitnehmerplatte (**4**) aufsitzt, wobei sich die Ringschulter (**47**) zwischen dem Innenzahnkranz (**42**) und der Ringnut (**43**) ergibt.

7. Rückspülbarer Filter nach Anspruch 1, dadurch gekennzeichnet, dass der Filtereinsatz (**1**) aus einer Vielzahl von aneinander gefügten scheibenförmigen Filterringen (**100**) besteht, wodurch sich eine Kartuschenform ergibt.

8. Rückspülbarer Filter nach Anspruch 7, dadurch gekennzeichnet, dass die Filterringe (**100**) auf ein Stützrohr (**15**) aufgeschoben sind, welches zuunterst den Abschlussdeckel (**10**) und zuoberst die Filterhülse (**12**) mit den Stützflügeln (**13**) aufweist.

9. Rückspülbarer Filter nach Anspruch 7 oder 8, dadurch gekennzeichnet, dass der Filterring (**100**)
a) auf der Anströmseite (**A**) - mit Bezug auf den Filtermodus - einen erweiterten Querschnitt besitzt, der sich zur Abströmseite (**B**) hin verjüngt;
b) auf einer Ringfläche (**110**) systematisch über den Umfang verteilte Abstandsnocken (**111**) aufweist, deren Höhe die Spaltbreite und damit die Filterfeinheit bestimmen; und
c) auf der Innenseite (**120**) ein nach innen gewandter Positionierungsnocken (**121**) vorhanden ist, welcher beim Aufschieben auf das Stützrohr (**15**) zwischen zwei Längsstreben (**16**) zu liegen kommt, so dass alle Abstandsnocken (**111**) aller aneinander gefügten Filterringe (**100**) zueinander ausgerichtet sind.
